# EUROPEAN PATENT APPLICATION

(11) **EP 3 015 217 A1**
(43) Date of publication of application: **04.05.2016**
(21) Application number: 15192301.8
(22) Date of filing: 30.10.2015
(51) Int. Cl.: B23P 19/02, B25B 27/02

(54) **DRIVE SHAFT PRESS-FITTING DEVICE**

(30) Priority: 31.10.2014 JP 2014222422
(71) Applicant: Toyota Jidosha Kabushiki Kaisha, Toyota-shi, Aichi-ken 471-8571 (JP)
(72) Inventor: URUNO, Kiyokazu, Toyota-shi,, Aichi 471-8571 (JP); TSUTSUI, Kenji, Toyota-shi,, Aichi 471-8571 (JP)
(74) Representative: TBK

(57) **Abstract**

In a drive shaft (20) press-fitting device, when a collet chuck (clamp) (13) is moved backward by a linear motion means (D), the end part of the collet chuck closes by collaboration of a tapered surface (13c) of the collet chuck (13) and an engagement part of a sleeve (23), and thereby the collet chuck holds an external thread (20a) part of the drive shaft (20). When the collet chuck (13) is further moved backward by the linear motion means (D), the drive shaft (20) is drawn out of the axle hub (21) by the collet chuck, and thereby the drive shaft (20) is pressed into the axle hub (21). After press-fitting, when the collet chuck (13) is moved forward by the linear motion means (D), the collet chuck (13) opens to be away from the external thread part (20a) of the drive shaft (20) by a biasing means (22).

## Description

### BACKGROUND OF THE INVENTION

### 1. Field of the Invention

The present invention relates to a drive shaft press-fitting device that is used to press a drive shaft having an external thread at its end into an axle hub.

### 2. Description of Related Art

Japanese Examined Utility Model Application Publication No. H05-41041 discloses a technique in this field. In the drive shaft press-fitting device disclosed therein, a nut that is held in a socket placed in the device is brought into contact with the end of an external thread of a drive shaft with the external thread at the end of the drive shaft projecting from an axle hub. After that, the device actuates a nut runner to rotate the socket and thereby screws the nut with the external thread. At this time, because the axle hub is held by the device so that it does not rotate when tightening the nut, the end of the drive shaft gradually projects from the axle hub as the nut is tightened. The drive shaft is then gradually pressed inside the shaft insertion hole of the axle hub by the nut tightening force.

However, because the drive shaft press-fitting device according to the related art described above uses the nut tightening force when pressing the drive shaft into the axle hub, there is a possibility that a heavy load is applied to the internal thread of the nut to cause breakage of the thread on the nut, and the drive shaft cannot be reliably pressed into the axle hub. Particularly, in the case where the nut has a groove for fastening by swaging the nut to the external thread of the drive shaft, there is a possibility that the nut is chipped by the edge of the groove, and when powder generated due to the chipping enters the thread part, seizure occurs on the external thread of the drive shaft and the internal thread of the nut, and the drive shaft cannot be reliably pressed into the axle hub.

### SUMMARY OF THE INVENTION

An object of the present invention is to provide a drive shaft press-fitting device that can reliably press a drive shaft into an axle hub.

According to one aspect of the present invention, a drive shaft press-fitting device for pressing a drive shaft having an external thread part at an end into axle hub includes a clamp whose end can freely open and close for holding or releasing an end of the drive shaft, a linear motion means for moving the clamp in a direction of drawing out the end of the drive shaft from the axle hub, a tapered surface formed on an outside surface of the end of the clamp, sloping downward in the direction of drawing out the drive shaft, a sleeve placed around the clamp and having an engagement part for moving the clamp to close in sliding contact with the tapered surface of the clamp, and a biasing means placed inside the clamp, for biasing the clamp to open.

In this drive shaft press-fitting device, when the clamp is moved backward (in the direction of moving away from the axle hub) by the linear motion means, the end part of the clamp closes by collaboration of the tapered surface of the clamp and the engagement part of the sleeve. The clamp thereby holds the external thread part of the drive shaft. Then, when the clamp is further moved backward by the linear motion means, the drive shaft is drawn out of the axle hub by the clamp, and thereby the drive shaft is pressed into the axle hub. After the press-fitting, when the clamp is moved forward (in the direction of moving close to the axle hub) by the linear motion means, the clamp opens to be away from the external thread part of the drive shaft by the biasing means placed inside the clamp. By such an operation of the drive shaft press-fitting device, there is no need for press-fitting the drive shaft using the tightening force of the nut in contrast to the related art, and it is thereby possible to reliably press the drive shaft into the axle hub.

In another aspect, an inside surface of the end of the clamp has a teeth part to be engaged with the external thread part of the drive shaft.

If the teeth part of the clamp is formed to be engaged with the external thread part, the clamp can hold the external thread part of the drive shaft without breaking the external thread part, and a force when the clamp moves backward can be reliably transferred to the drive shaft.

In another aspect, the drive shaft press-fitting device includes an outer frame enclosing the sleeve, the sleeve is placed between the outer frame and the clamp, and the engagement part is formed on the internal surface of the end of the sleeve as a pressurizing surface sloping to reduce an inside diameter of the sleeve in the direction of drawing out the drive shaft.

In this structure, the tapered surface of the clamp and the pressurizing surface of the sleeve can be in surface contact with each other to move the end part of the clamp to close, so that a uniform holding force can be generated at the end part of the clamp through the tapered surface.

In another aspect, the drive shaft press-fitting device includes an outer frame enclosing the sleeve, a slider freely movable in the direction of drawing out the drive shaft is placed inside the outer frame, the sleeve is placed on a front side and the slider is placed on a rear side in the outer frame, and the linear motion means includes the slider, an internal thread part provided inside the slider, an external threaded shaft to be screwed with the internal thread part, and a motor for rotating the external threaded shaft.

In this structure, it is possible to linearly move the clamp forward and backward using the rotation of the motor.

In another aspect, the drive shaft press-fitting device includes an outer frame enclosing the sleeve, a slider freely movable in the direction of drawing out the drive shaft is placed inside the outer frame, the sleeve is placed on a front side and the slider is placed on a rear side in the outer frame, and the linear motion means includes the slider, and a piston-cylinder mechanism joined to the slider, for moving the slider forward and backward.

In this structure, it is possible to linearly move the clamp forward and backward with a simple structure.

According to the present invention, it is possible to reliably press a drive shaft into an axle hub.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a sectional view showing one embodiment of a drive shaft press-fitting device according to the present invention;
Fig. 2 is a front view showing open and close of a collet chuck;
Fig. 3 is a sectional view showing a state where a drive shaft is held by the collet chuck;
Fig. 4 is a sectional view showing a state after completion of press-fitting of the drive shaft;
Fig. 5 is a sectional view showing the drive shaft press-fitting device equipped with a detection means and a controller;
Fig. 6 is a flowchart showing the operation of the drive shaft press-fitting device;
Fig. 7 is a sectional view showing a state where the drive shaft press-fitting device has returned to the initial position after completion of press-fitting; and
Fig. 8 is a sectional view showing another embodiment of a drive shaft press-fitting device according to the present invention.

### DESCRIPTION OF THE EXEMPLARY EMBODIMENTS

Preferred embodiments of a drive shaft press-fitting device according to the present invention are described hereinafter in detail with reference to the drawings.

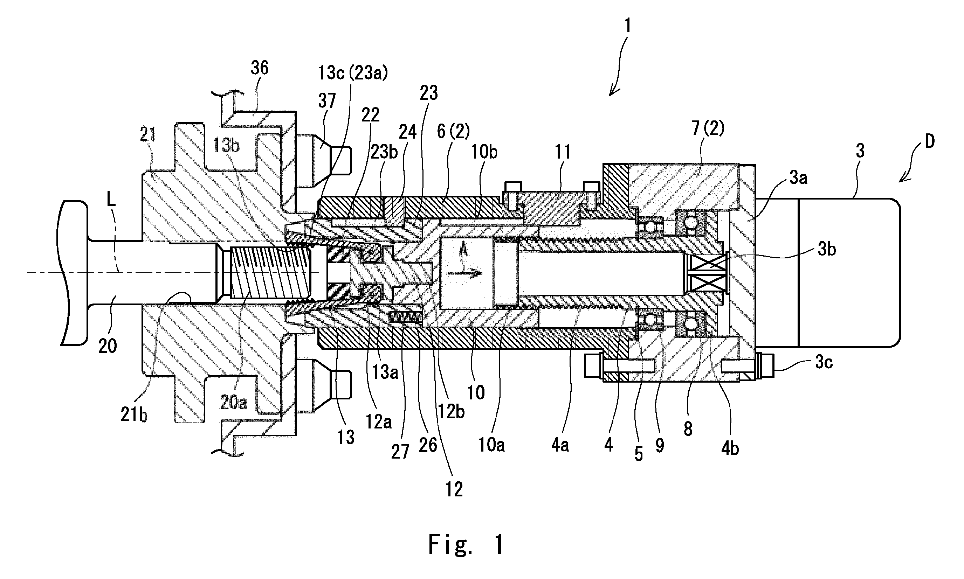

As shown in Fig. 1, a drive shaft press-fitting device 1 for pressing a drive shaft 20 into an axle hub 21 has a cylindrical outer frame 2, and a motor 3 is fixed to the rear end of the outer frame 2. A flange 3a of the motor 3 is fixed to the rear end of the outer frame 2 through a bolt 3c, and a driving shaft 3b of the motor 3 is inserted inside the outer frame 2. The rear end of an external threaded shaft 4 is fixed to the driving shaft 3b.

The outer frame 2 is made up of a cylindrical outer frame body 6 and a bearing accommodation 7 fixed to the rear end of the outer frame body 6. In the bearing accommodation 7, a thrust bearing 8 and a radial bearing 9 for holding the external threaded shaft 4 are accommodated. The thrust bearing 8 comes into contact with a flange part 4b placed at the rear end of the external threaded shaft 4, and the radial bearing 9 is fixed to the external threaded shaft 4 at its inner race and restricts the radial bearing 9 from moving along the axis line L by a circlip 5.

A slider 10 is screwed onto external threaded shaft 4 held by the thrust bearing 8 and the radial bearing 9. On the inside of the slider 10, an internal thread part 10a to be screwed with an external thread part 4a of the external threaded shaft 4 is placed, and the slider 10 moves forward and backward by the rotation of the external threaded shaft 4. On the outside of the slider 10, a key groove 10b that extends along the axis line L is provided, and a parallel key 11 fixed to the outer frame 2 is inserted in the key groove 10b. The slider 10 is thereby reliably guided along the internal surface of the outer frame 2 in the direction of the axis line L, and the rotation about the axis line L is prevented.

Note that a linear motion means D that is used to allow a collet chuck 13, which is described later, to move forward and backward along the axis line L is composed of the slider 10, the internal thread part 10a provided inside the slider 10, the external threaded shaft 4 that screws with the internal thread part 10a, and the motor 3 that rotates the external threaded shaft 4. In this structure, the collet chuck 13 can smoothly move forward and backward linearly by using the rotation of the motor 3.

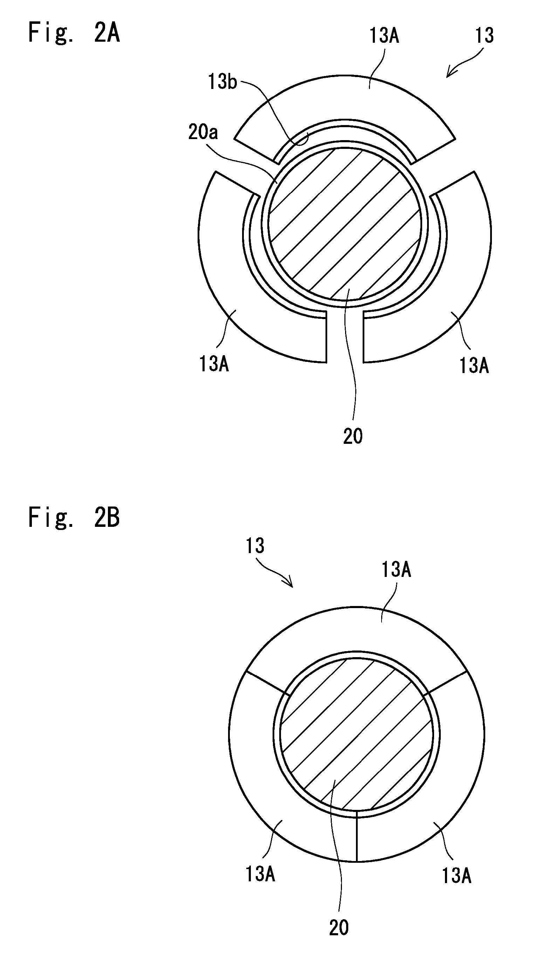

A collet support member 12 is fixed to the front end of the slider 10 through a thread part 12b, and the collet chuck (clamp) 13 that can freely open and close is fixed to the slider 10 through the collet support member 12. The collet chuck 13 has a trapezoidal cone shape, and it is vertically split in three chuck pieces 13A of the same shape (see Fig. 2). A protrusion 13a at the base end of the collet chuck 13 is accommodated in a circular depression 12a on the collet support member 12. The internal surface of the end part of the collet chuck 13 has teeth part 13b to be engaged with an external thread part 20a at the end of the drive shaft 20.

If the teeth part 13b is formed to be engaged with the external thread part 20a of the drive shaft 20, that is, if the pitch of the teeth of the external thread part 20a and the pitch of the teeth part 13b are substantially the same, the collet chuck 13 can hold the external thread part 20a of the drive shaft 20 without breaking the teeth of the external thread part 20a, and a force when the collet chuck 13 moves backward can be reliably transferred to the drive shaft 20.

In the internal space of the collet chuck 13, a biasing means 22 that is made of a cylindrical or columnar elastic body (for example, urethane rubber) is placed, and the biasing means 22 biases the collet chuck 13 to open. Thus, when the collet chuck 13 opens, each of the chuck pieces 13A can smoothly move in the diameter direction by the elastic force of the biasing means 22 to make sure that the collet chuck 13 opens (see Fig. 2).

The outer end part of each chuck piece 13A of the collet chuck 13 has a tapered surface 13c. Accordingly, the end part of the collet chuck 13 has a trapezoidal cone shape. The tapered surface 13c slopes downward in the direction A of drawing out the drive shaft 20.

On the periphery of the collet chuck 13, a cylindrical sleeve 23 is placed between the outer frame 2 and the collet chuck 13. The internal surface of the end part of the sleeve 23 has an engagement part 23a that is in sliding contact with the tapered surface 13c of the collet chuck 13, and each chuck piece 13A can be moved along the diameter by the tapered surface 13c and the engagement part 23a. The engagement part 23a is formed on the internal surface of the end part of the sleeve 23 and is formed as a pressurizing surface having a slope to reduce the inside diameter of the sleeve 23 in the direction A of drawing out the drive shaft 20. In such a structure, the tapered surface 13c of the collet chuck 13 and the pressurizing surface 23a of the sleeve 23 can be in surface contact with each other to move the end part of the collet chuck 13 to close, so that a uniform holding force can be generated at the end part of the collet chuck 13 through the tapered surface 13c.

The peripheral surface of the sleeve 23 has a guide groove 23b that extends along the axis line L, and a stopper pin 24 that is inserted in the guide groove 23b is fixed to the outer frame 2. The stopper pin 24 comes into contact with the both sides of the guide groove 23b and thereby restricts the movement of the sleeve 23 in the direction of the axis line L. The stopper pin 24 further serves as a detent of the sleeve 23 in the circumferential direction.

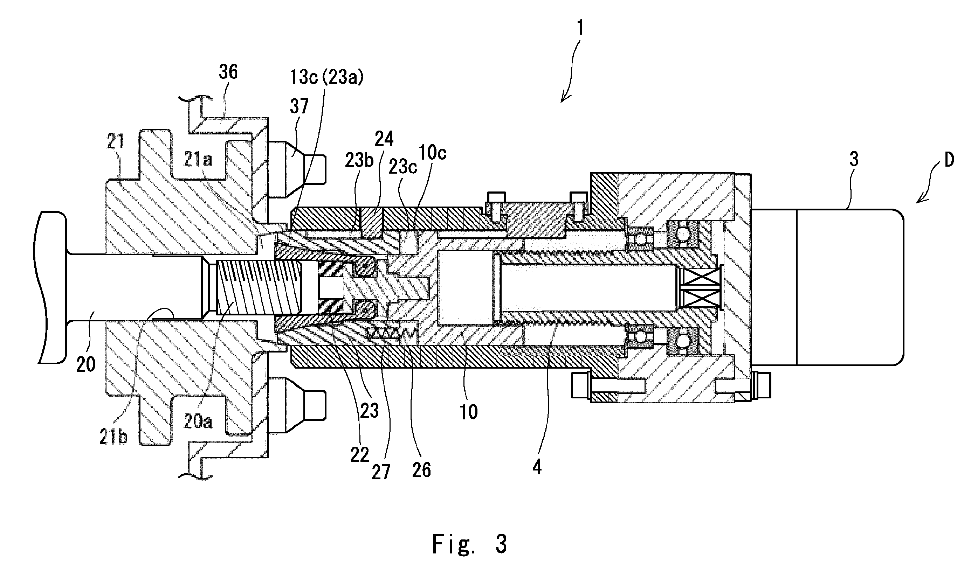

Inside the outer frame 2, the sleeve 23 is placed on the front side, and the slider 10 is placed on the rear side. A spring 26 is inserted in a spring loading hole 27 that is provided on the rear end surface 23c (see Fig. 3) of the sleeve 23, and the spring 26 always pushes the sleeve 23 toward the front with respect to the slider 10. When the slider 10 moves in the direction A of drawing out the drive shaft 20, the sleeve 23 is pushed against the stopper pin 24 by the force of the spring 26 and stops, and the collet 13 that is placed at the slider 10 through the collet support member 12 clamps the drive shaft 20 on the engagement part 23a of the sleeve 23 (see Fig. 3). At this time, the gap between the rear end surface 23c of the sleeve 23 and the front end surface of the slider 10 is as shown in Fig. 3. The drive shaft 20 can be reliably clamped by the force of the spring 26. Further, the sleeve 23 can be reliably moved in the direction A of drawing out the drive shaft 20.

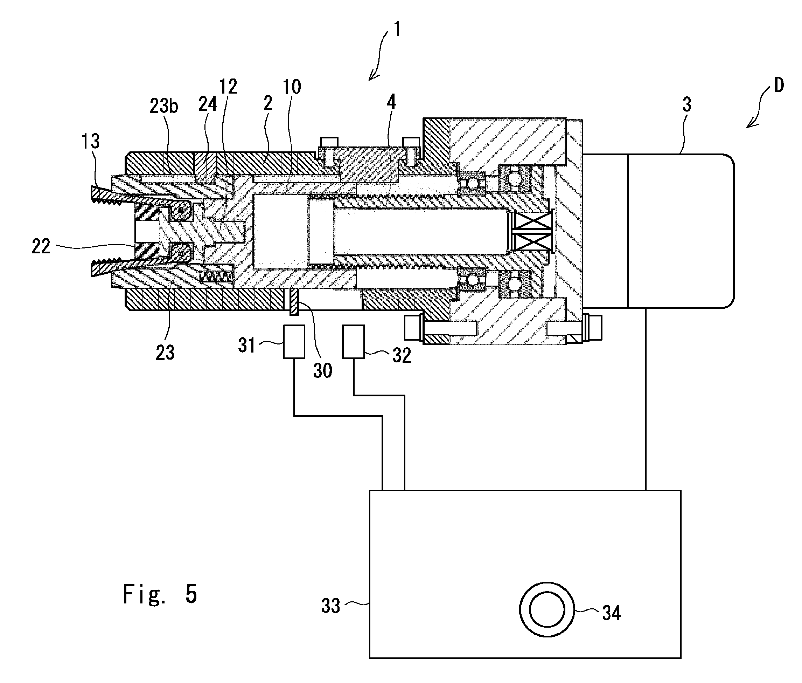

As shown in Fig. 5, a dog 30 that serves as a sensed unit fixed to the slider 10 is provided in the drive shaft press-fitting device 1. Further, in the outside of the outer frame 2, a first proximity sensor 31 that senses the dog 30 and thereby detects the initial position of the collet chuck 13 is placed on the front side, and a second proximity sensor 32 that senses the dog 30 and thereby detects the completion of press-fitting of the drive shaft 20 is placed on the rear side. A controller 33 processes detection signals of the proximity sensors 31 and 32 and controls the rotation of the motor 3. The controller 33 has a switch 34 for activating the motor 3.

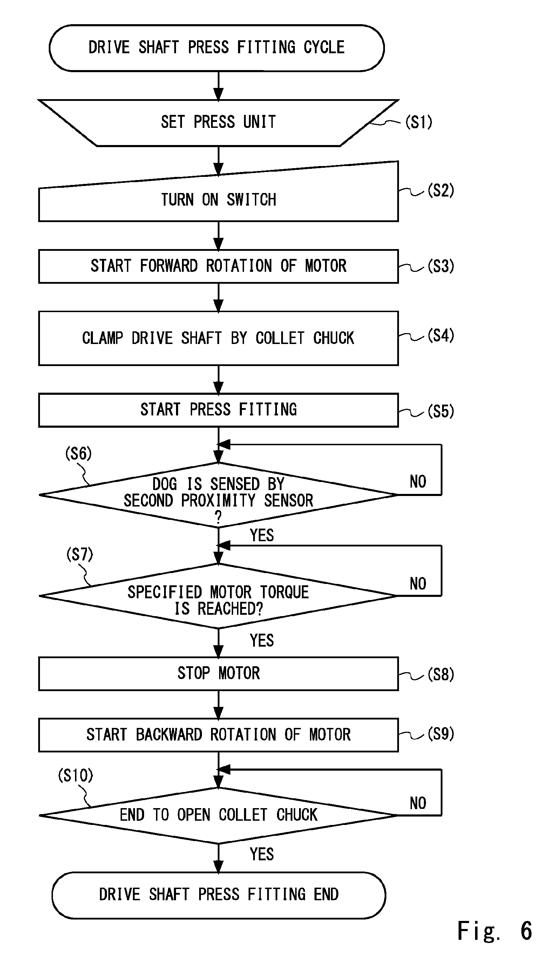

The operation of the drive shaft press-fitting device 1 is described hereinafter with reference to Fig. 6.

As shown in Fig. 1, the axle hub 21 in which the drive shaft 20 is temporarily placed is set to an assembly jig 36 of the drive shaft press-fitting device 1 through a nut 37 (S1). At this time, because the collet chuck 13 opens to its maximum, the external thread part 20a of the drive shaft 20 is inserted in the collet chuck 13. In this case, the end of the collet chuck 13 is inserted in a depression 21a of the axle hub 21. Note that the depression 21a is formed to surround the outer end of a drive shaft press hole 21b and used for centering of a wheel.

In this state, the switch 34 of the controller 33 is pressed (S2). The motor 3 thereby starts rotating forward (S3), and the external threaded shaft 4 rotates to move the slider 10 backward. At this time, because the sleeve 23 is pushed forward by the spring 26, the sleeve 23 is kept in contact with the stopper 24. As the slider 10 moves backward, the collet chuck 13 gradually closes by the collaboration of the tapered surface 13c of the collet chuck 13 and the engagement part 23a of the sleeve 23, and the teeth part 13b is engaged with the external thread part 20a of the drive shaft 20, and thereby the drive shaft 20 is completely clamped by the collet chuck 13 (see Fig. 3) (S4). In the state of being clamped, the gap between the front end surface 10c of the slider 10 and the rear end surface 23c of the sleeve 23 is as shown in Fig. 3. Because the motor 3 continues to rotate, the collet chuck 13 and the sleeve 23 start moving backward together and are then removed from the stopper 24, and thereby the press-fitting of the drive shaft 20 is started (S5).

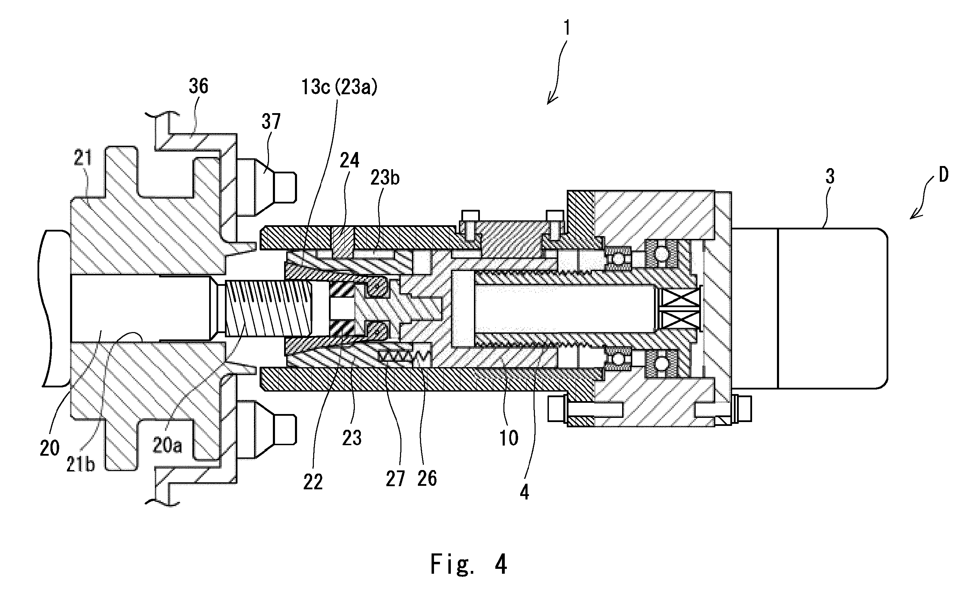

After that, when the second proximity sensor 32 senses the dog 30 (S6), it is determined whether the motor 3 has reached a specified torque required for press-fitting (S7). When the motor 3 has reached the specified torque, it is determined that the press-fitting of the drive shaft 20 is completed, and the motor 3 stops as shown in Fig. 4 (S8). After that, the motor 3 starts rotating backward (S9), and the collet chuck 13 and the sleeve 23 move forward together. In this state, the collet chuck 13 clamps the drive shaft 20, and the outer frame 2 moves backward relative to the drive shaft press hole 21b. Further, when the slider 10 moves forward, the sleeve 23 strikes the stopper 24 and stops, but because the slider 10 continues to move forward, only the collet chuck 13 moves forward with the position of the sleeve 23 remaining unchanged by the collaboration of the tapered surface 13c of the collet chuck 13 and the engagement part 23a of the sleeve 23. When the collet chuck 13 moves forward, the collet chuck 13 gradually opens by the elastic force of the biasing means 22, and thereby the clamping of the drive shaft 20 by the collet chuck 13 is released.

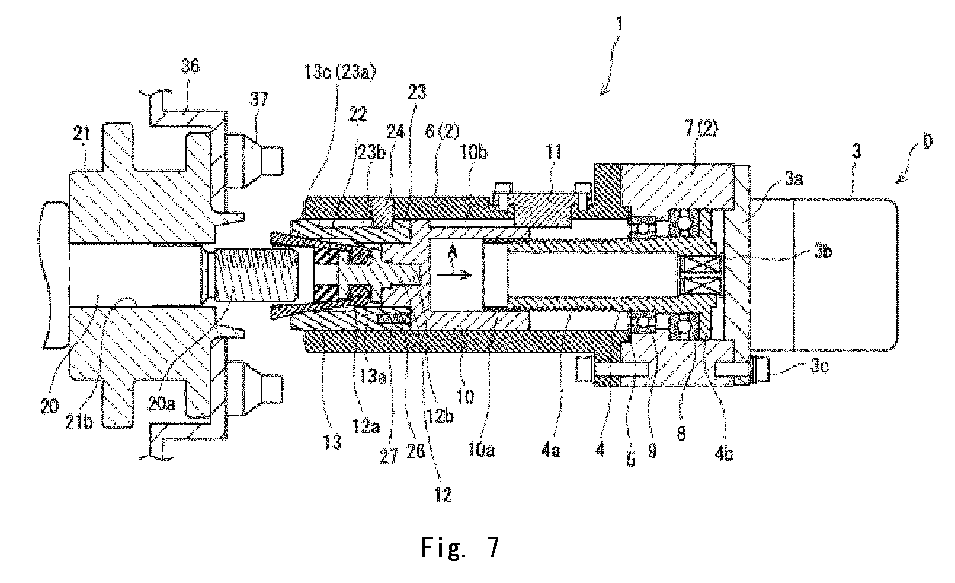

When the slider 10 further moves forward, the gap between the front end surface 10c of the slider 10 and the rear end surface 23c of the sleeve 23 becomes substantially zero (see Fig. 7), and the collet chuck 13 returns to the original position. Then, when the first proximity sensor 31 senses the dog 30 (S10), it is determined that the collet chuck 13 has returned to the original position, and the motor 3 stops. The operation for the press-fitting of the drive shaft 20 thereby ends.

Stated differently, in the drive shaft press-fitting device 1, when the collet chuck (clamp) 13 is moved backward (in the direction of moving away from the axle hub 21) by the linear motion means D, the end part of the collet chuck 13 closes by the collaboration of the tapered surface 13c of the collet chuck 13 and the engagement part 23a of the sleeve 23. The collet chuck 13 thereby holds the external thread part 20a of the drive shaft 20. Then, when the collet chuck 13 is further moved backward by the linear motion means D, the drive shaft 20 is drawn out of the axle hub 21 by the collet chuck 13, and thereby the drive shaft 20 is pressed into the axle hub 21.

After the press-fitting, when the collet chuck 13 is moved forward (in the direction of moving close to the axle hub 21) by the linear motion means D, the collet chuck 13 opens to be away from the external thread part 20a of the drive shaft 20 by the biasing means 22 that is placed inside the collet chuck 13. By such an operation of the drive shaft press-fitting device 1, there is no need for press-fitting the drive shaft 20 using the tightening force of the nut in contrast to the related art, and it is thereby possible to reliably press the drive shaft 20 into the axle hub 21.

The present invention is not restricted to the above-described embodiment, and various changes and modifications may be made without departing from the scope of the invention.

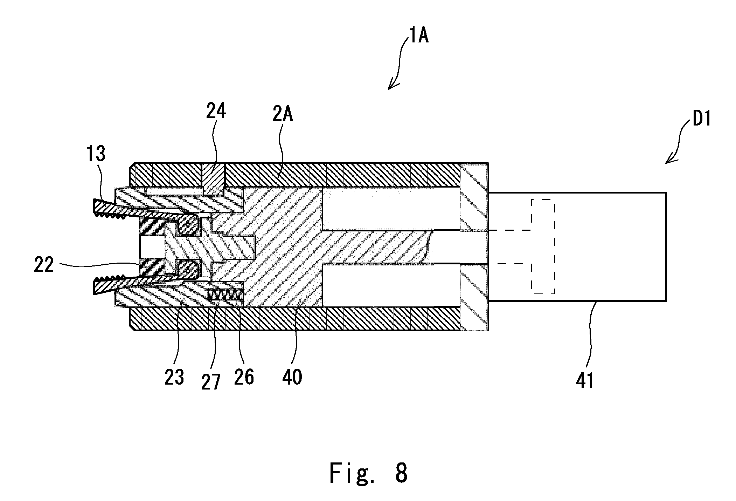

As shown in Fig. 8, in a drive shaft press-fitting device 1A according to another embodiment, a linear motion means D1 fixed to an outer frame 2A is composed of a slider 40 that slides along the internal surface of the outer frame 2A and a piston-cylinder mechanism 41 that is joined to the slider 40 and moves the slider 40 forward and backward. In this structure, it is possible to linearly move the collet chuck 13 forward and backward with a simple structure.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

In a drive shaft press-fitting device, when a collet chuck (clamp) is moved backward by a linear motion means, the end part of the collet chuck closes by collaboration of a tapered surface of the collet chuck and an engagement part of a sleeve, and thereby the collet chuck holds an external thread part of the drive shaft. When the collet chuck is further moved backward by the linear motion means, the drive shaft is drawn out of the axle hub by the collet chuck, and thereby the drive shaft is pressed into the axle hub. After press-fitting, when the collet chuck is moved forward by the linear motion means, the collet chuck opens to be away from the external thread part of the drive shaft by a biasing means.

## Claims

1. A drive shaft press-fitting device for pressing a drive shaft having an external thread part at an end into an axle hub, comprising:
a clamp whose end can freely open and close for holding or releasing the end of the drive shaft;
a linear motion means for moving the clamp in a direction of drawing out the end of the drive shaft from the axle hub;
a tapered surface formed on an outside surface of the end of the clamp, sloping downward in the direction of drawing out the drive shaft;
a sleeve placed around the clamp and having an engagement part for moving the clamp to close in sliding contact with the tapered surface of the clamp; and
a biasing means placed inside the clamp, for biasing the clamp to open.

2. The drive shaft press-fitting device according to Claim 1, wherein an inside surface of the end of the clamp has a teeth part to be engaged with the external thread part of the drive shaft.

3. The drive shaft press-fitting device according to Claim 1 or 2, comprising:
an outer frame enclosing the sleeve, wherein
the sleeve is placed between the outer frame and the clamp, and
the engagement part is formed on the internal surface of the end of the sleeve as a pressurizing surface sloping to reduce an inside diameter of the sleeve in the direction of drawing out the drive shaft.

4. The drive shaft press-fitting device according to any one of Claims 1 to 3, comprising:
an outer frame enclosing the sleeve, wherein
a slider freely movable in the direction of drawing out the drive shaft is placed inside the outer frame,
in the outer frame, the sleeve is placed on a front side, and the slider is placed on a rear side, and
the linear motion means includes
the slider,
an internal thread part provided inside the slider,
an external threaded shaft to be screwed with the internal thread part, and
a motor for rotating the external threaded shaft.

5. The drive shaft press-fitting device according to any one of Claims 1 to 3, comprising:
an outer frame enclosing the sleeve, wherein
a slider freely movable in the direction of drawing out the drive shaft is placed inside the outer frame,
in the outer frame, the sleeve is placed on a front side, and the slider is placed on a rear side, and
the linear motion means includes
the slider, and
a piston-cylinder mechanism joined to the slider, for moving the slider forward and backward.
